# EUROPÄISCHE PATENTSCHRIFT

(11) **EP 2 623 244 B1**
(45) Veröffentlichungstag und Bekanntmachung des Hinweises auf die Patenterteilung: **28.10.2020**
(21) Anmeldenummer: 12008207.8
(22) Anmeldetag: 07.12.2012
(51) Int. Cl.: B23F 23/04, B23F 23/06, B23F 17/00, B23Q 3/06, B23Q 17/00

(54) **Verfahren zum Betrieb einer Werkzeugmaschine sowie Werkzeugmaschine**
Method for operating a machine tool and machine tool
Procédé destiné au fonctionnement d'une machine-outil et machine-outil

(30) Priorität: 03.02.2012 DE 102012002125
(43) Veröffentlichungstag der Anmeldung: 07.08.2013
(73) Patentinhaber: LIEBHERR-VERZAHNTECHNIK GmbH, 87437 Kempten (DE)
(72) Erfinder: Haas, Gebhard, 87452 Altusried (DE)
(74) Vertreter: Laufhütte, Dieter

(56) Entgegenhaltungen:
- EP-B1- 1 146 983
- WO-A1-2011/114558
- DE-A1- 2 458 958

## Beschreibung

Die vorliegende Erfindung betrifft ein Verfahren zum Betrieb einer Werkzeugmaschine, insbesondere einer Verzahnmaschine, sowie eine Werkzeugmaschine, insbesondere eine Verzahnmaschine.

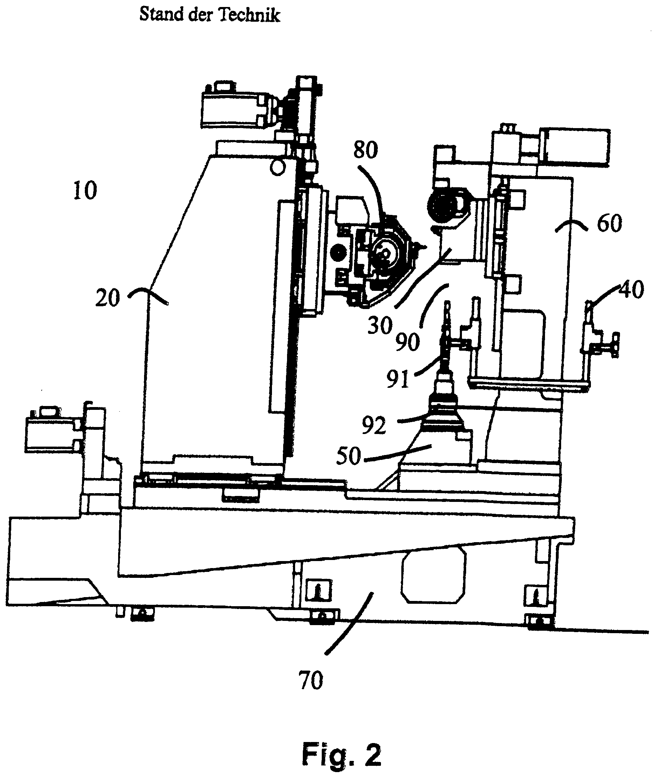

Bekannte Verzahnmaschinen 10' weisen einen Maschinentisch 50' mit einem zugeordneten Gegenständer 60' und einem daran montierten Gegenhalterarm 30' bzw. einer Pinole 30' auf (vgl. Figur 2).

Der Gegenhalterarm 30' hat die Funktion, das Spannvorrichtungsoberteil 90', das nicht im Detail dargestellt ist, auf das Werkstück 91' abzusenken bzw. abzusetzen, spannt aber zusätzlich in den meisten Fällen auch noch das Werkstück 91' zwischen dem Spannungsvorrichtungsunterteil 92' und dem Spannungsvorrichtungsoberteil 90' ein. Dies gilt sowohl für wellenförmige Werkstücke als auch für Bohrungsteile.

Bei wellenförmigen Werkstücken kommt zusätzlich noch eine Führungs- und Zentrierungsfunktion des Gegenständers 60' hinzu, d. h. Fluchtfehler des Gegenhalterarms 30' gegenüber der Tischmitte des Maschinentisches 50' machen sich negativ auf das Bearbeitungsergebnis bemerkbar.

Um die unproduktiven Nebenzeiten für Nebenprozesse wie Werkstücke be- und entladen, Werkstücke einspannen und auch für die lageorientierte Positionierung von Werkstücken zu minimieren, ist es ebenfalls bekannt, Verzahnmaschinen, vor allem Verzahnungsschleifmaschinen mit zwei Maschinentischen auszurüsten. Da aber nun die Nebenprozesse nun hauptzeitparallel zur Bearbeitung stattfinden, besteht das Problem, dass sich die Nebenprozesse aufgrund der mechanischen Kopplung der entsprechenden Einspannvorrichtungen für die Werkstücke unvorteilhaft auf das Bearbeitungsergebnis auswirken können, was jedoch unerwünscht und daher zu vermeiden ist.
Aus der EP 1 146 983 B1 ist bereits eine derartige Verzahnmaschine mit einem Doppeltisch bekannt.
Die EP 2 305 409 A1 offenbart ferner ein Verfahren zum Betreiben einer Verzahnungsschleifmaschine mit hängenden Maschinentischen zum Be- und Entladen der Maschine.
Die EP 1 992 439 A1 betrifft eine Verzahnmaschine mit einem Gegenständer auf einem Rundtisch.

Aus der WO 2011/114558 A1 ist ein Verfahren gemäß dem Oberbegriff des Anspruchs 1 und eine Werkzeugmaschine gemäß dem Oberbegriff des Anspruchs 3 bekannt.

Jedoch besteht bei den vorgenannten aus dem Stand der Technik bekannten Ansätzen das Problem, dass sich Nebenprozesse unvorteilhaft auf das Bearbeitungsergebnis auswirken können, was jedoch unerwünscht und daher zu vermeiden ist.
Es ist daher die Aufgabe der vorliegenden Erfindung, ein Verfahren zum Betrieb einer Werkzeugmaschine sowie eine Werkzeugmaschine in vorteilhafter Weise weiterzubilden, insbesondere dahingehend, dass sich Nebenprozesse beim Betrieb der Werkzeugmaschine nicht bzw. nicht wesentlich auf das Bearbeitungsergebnis des Bearbeitungsprozesses auswirken.

Diese Aufgabe wird erfindungsgemäß gelöst durch ein Verfahren mit den Merkmalen des Anspruchs 1. Danach ist vorgesehen, dass bei einem Verfahren zum Betrieb einer Werkzeugmaschine mit wenigstens zwei Maschinentischen, mit wenigstens einem gemeinsamen Gegenständer und mit mindestens zwei Gegenhalterarmen, die Spannkräfte auf ein eingespanntes und/oder einzuspannendes Werkstück an der jeweiligen Position in Abhängigkeit des aktuellen Prozesses und in Abhängigkeit von den gemäß aktuellem Prozess notwendigen Prozesskräften gesteuert und/oder geregelt werden.

Dadurch kann vorteilhaft verhindert werden, dass sich Verformungseinflüsse aus dem Spannablauf des Werkstückspannens negativ auf das Bearbeitungsergebnis des gerade bearbeiteten weiteren Werkstückes auswirken. Insbesondere ist es dadurch möglich, Bewegungen und Verformungen des Gegenständers, die bei Nebenprozessen, hauptzeitparallel zur Bearbeitung eines ersten Werkstückes stattfinden, wie dies beispielsweise beim Be- und Entladen eines zweiten Werkstückes der Fall ist, zu minimieren und deren Auswirkungen auf die Bearbeitung zu verringern oder zu verhindern, so dass sich diese Verformungen nicht negativ bemerkbar machen.

Die Werkzeugmaschine kann eine Verzahnmaschine sein, insbesondere eine Verzahnmaschine, mittels derer eine Verzahnung auf einem Werkstück herstellbar ist, beispielsweise durch Fräsen und/oder Stoßen und/oder Schleifen. Vorzugsweise handelt es sich bei der Verzahnmaschine um eine Verzahnungsschleifmaschine.

Bei dem Verfahren zum Betrieb einer Werkzeugmaschine handelt es sich insbesondere um ein Verfahren zur Ansteuerung einer Gegenhalter-/Pinolenfunktion bei Maschinen mit mehreren Maschinentischen, insbesondere Verzahnmaschinen mit einem gemeinsamen Gegenständer, aber mehreren Gegenhalterarmen.

Darüber hinaus kann vorgesehen sein, dass ein Werkstück beim Be- und/oder Entladen der Werkzeugmaschine mit einer Spannkraft zentriert und gespannt wird, wobei die Spannkraft derart bemessen ist, dass sie ausreichend groß ist, um das Werkstück für den Werkstückpositionierungsprozess in Position zu halten.

Außerdem umfasst die Erfindung, dass die Werkzeugmaschine eine Be- und Entladeposition, die eine erste Position eines der Maschinentische ist, aufweist und dass sämtliche an der Be- und Entladeposition durchgeführten Nebenprozesse mit reduzierter Spannkraft durchgeführt werden, wobei die Spannkraft derart bemessen ist, dass sie ausreichend groß ist, um das Werkstück an der Be- und Entladeposition in Position zu halten.

Ferner umfasst die Erfindung, dass vor einer Bewegung bzw. bei einer Bewegung des Werkstückes von der Be- und Entladeposition in die Bearbeitungsposition die Spannkraft erhöht wird.

Darüber umfasst die Erfindung, dass bei einer Bewegung des Werkstückes von der Bearbeitungsposition, die eine zweite Position eines der Maschinentische ist, in die Be- und Entladeposition die Spannkraft verringert wird.
Die Erhöhung / Verminderung der Spannkraft kann immer dann erfolgen, wenn nicht gerade das Werkstück bearbeitet wird; im Extremfall sogar noch während eines mehrstufigen Bearbeitungsvorganges (unter Voraussetzung von genügendem Beabeitungaufmaß).Allerdings muß im letzten Schnitt, bei dem die Werkstückqualität erzeugt wird, eine Verformung des Gegenständers unbedingt vermieden werden.
Des Weiteren betrifft die vorliegende Erfindung eine Werkzeugmaschine mit den Merkmalen des Anspruchs 3. Danach ist vorgesehen, dass eine Werkzeugmaschine, insbesondere eine Verzahnmaschine, mit wenigstens zwei Maschinentischen, mit wenigstens einem gemeinsamen Gegenständer, mit mindestens zwei Gegenhalterarmen und mit wenigstens einer Steuer- und/oder Regelungseinheit versehen ist, wobei mittels der Steuer- und/oder Regelungseinheit die Spannkräfte auf ein eingespanntes und/oder einzuspannendes Werkstück an der jeweiligen Position in Abhängigkeit des aktuellen Prozesses und in Abhängigkeit von den gemäß aktuellem Prozess notwendigen Prozesskräften Steuer- und/oder regelbar sind.
Es ist möglich, dass die Spannkraft mittels der Steuer- und/oder Regelungseinheit mittelbar und/oder unmittelbar derart steuerbar ist, so dass ein Werkstück beim Be-und/oder Entladen der Werkzeugmaschine mit einer Spannkraft zentrierbar und spannbar wird, wobei die Spannkraft derart bemessen ist, dass sie ausreichend groß ist, um das Werkstück für den Werkstückpositionierungsprozess in Position zu halten.

Denkbar umfasst die Erfindung, dass die Werkzeugmaschine eine Be- und Entladeposition, die eine erste Position eines der Maschinentische ist, aufweist und dass die Spannkraft mittels der Steuer- und/oder Regelungseinheit mittelbar und/oder unmittelbar derart steuerbar ist, so dass sämtliche an der Be- und Entladeposition durchgeführten Nebenprozesse mit reduzierter Spannkraft durchgeführt werden, wobei die Spannkraft vorzugsweise derart bemessen ist, dass sie ausreichend groß ist um das Werkstück an der Be- und Entladeposition in Position zu halten.

Die Erfindung umfasst außerdem, dass vor einer Bewegung bzw. bei einer Bewegung des Werkstückes von der Be- und Entladeposition in die Bearbeitungsposition die Spannkraft erhöht wird und/oder dass vor einer Bewegung bzw. bei einer Bewegung des Werkstückes von der Bearbeitungsposition, die eine zweite Position eines der Maschinentische ist, in die Be- und Entladeposition die Spannkraft verringert wird.
Des Weiteren kann vorgesehen sein, dass mittels der Werkzeugmaschine das Verfahren gemäß einem der Ansprüche 1 und 2 durchführbar ist. Weitere Einzelheiten und Vorteile der Erfindung sollen nun anhand eines in der Zeichnung dargestellten Ausführungsbeispiels näher erläutert werden.

Es zeigen:
- Figur 1:: eine schematische Seitenansicht auf eine erfindungsgemäße Werkzeugmaschine; und
- Figur 2:: eine schematische Seitenansicht auf eine bekannte Werkzeugmaschine.

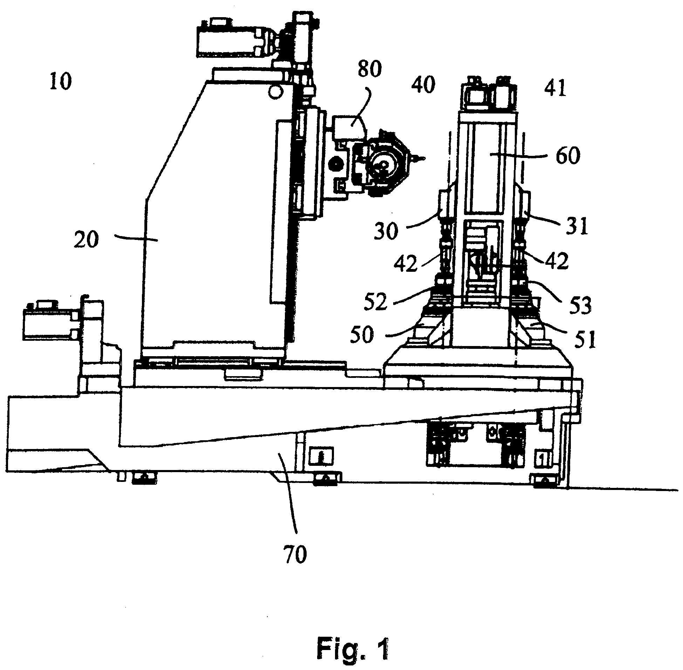

Figur 1 zeigt eine schematische Seitenansicht auf eine erfindungsgemäße Werkzeugmaschine 10 bzw. eine Verzahnmaschine 10. Die Verzahnmaschine 10 ist dabei eine Verzahnungsschleifmaschine 10 mit zwei Maschinentischen 50, 51, so dass es möglich ist, die unproduktiven Nebenzeiten für Nebenprozesse wie z.B. Werkstück be- und entladen, Werkstück spannen und auch Werkstück lageorientiert zu positionieren, nutzen zu können.

So können diese Nebenprozesse während der Verzahnungsbearbeitung an dem zweiten Maschinentisch, z. B. hier dem Maschinentisch 51 durchgeführt werden, während der erste Maschinentisch 50 für die eigentliche Bearbeitung des Werkstückes verwendet wird.

Das z. B. auf dem zweiten Maschinentisch 51 aufgespannte Werkstück ist sodann sofort bereit zur weiteren Bearbeitung, nachdem die beiden Maschinentische 50, 51 getauscht wurden. Dies gilt selbstverständlich auch dann, wenn man die Position des Bearbeitungskopfes 80 relativ zum Maschinentisch 50, 51 vertauschen würde. Wichtig ist dabei jedoch, dass die Bearbeitungsposition 40 mit der Nebenposition 41 getauscht wird.

Auf dem Maschinenbett 70 ist links ein Maschinenständer 20 montiert, der den Bearbeitungskopf 80 trägt. Rechts und gegenüber vom Maschinenständer 20 befinden sich dabei die beiden Maschinentischen 50, 51.

Nachdem nun die beiden Gegenhalterarme 30, 31 bei der Erfindung an einem gemeinsamen Gegenständer 60 montiert sind, können sich Einflüsse aus dem Spannablauf des Werkstückspannens auf die Bearbeitungsposition übertragen. Bedingt durch die Spannkräfte bzw. Kräfte, die beim Einspannen der Werkstückspannvorrichtungen 52, 53 entstehen, kann es zu kleinen Verformungen des Gegenständers 60 kommen, die sich im Bearbeitungsergebnis negativ bemerkbar machen können.

Erfindungsgemäß ist es nun vorgesehen, diese Einflüsse vorteilhaft zu minimieren bzw. sogar ganz zu vermeiden. Hierzu wird das Werkstück an der Be- und Entladeposition 41 nur mit einer minimalen Spannkraft zentriert und gespannt. Diese Kraft ist ausreichend groß, um zum Beispiel das Werkstück für den Werkstückpositionierprozess in Position zu halten. Diese Spannkraft ist aber nicht ausreichend, um Kräfte, die beim Bearbeitungsprozess auf das Werkstück wirken, aufzunehmen. Diese Spannkräfte werden erst zu einem späteren Zeitpunkt aufgebracht.

Bei einem erfindungsgemäßen Spannablauf werden alle Nebenprozesse an der Be- und Entladeposition 41, die auch die Position für sämtliche Nebenprozesse ist, mit reduzierter Spannkraft durchgeführt. So bleiben Kräfte, die zu einer Verformung des Gegenständers 60 führen könnten, niedrig. Sobald der Bearbeitungsprozess vorne an der Bearbeitungsposition 40 beendet ist, werden dort die Spannkräfte reduziert und es findet nun ein Wechsel der Tischposition der Maschinentische 50, 51 statt. Gleichzeitig werden nun an dem Maschinentisch, der sich nun zur Bearbeitungsposition 40 hinbewegt, die Spannkräfte erhöht.

Hierdurch wird es vorteilhaft möglich, dass sich die Verformungen des Gegenständers 60 nicht nachteilig im Bearbeitungsprozess bemerkbar machen können. Jedoch kann das Werkstück dennoch vollständig gespannt die Bearbeitungsposition 40 erreichen und der Bearbeitungsprozess kann sofort, nach dem Herstellen der Wälzkopplung, beginnen.

Figur 2 zeigt eine schematische Seitenansicht auf eine bekannte Werkzeugmaschine 10', die eine Verzahnmaschine 10' ist und die einen Maschinentisch 50' mit einem zugeordneten Gegenständer 60' und einem daran montierten Gegenhalterarm 30' bzw. einer Pinole 30' aufweist.

Auf dem Maschinenbett 70' ist links ein Maschinenständer 20' montiert, der den Bearbeitungskopf 80' trägt. Rechts und gegenüber vom Maschinenständer 20' befindet sich der Maschinentisch 50' mit dem zugehörigen Gegenständer 60' und dem daran montierten Gegenhalter 30' bzw. Gegenhalterarm 30' sowie dem Ringlader 40'.

Mittels des Gegenhalterarms 30' kann das Spannvorrichtungsoberteil 90', das nicht im Detail dargestellt ist, auf das Werkstück 91' abgesenkt bzw. abgesetzt werden. Es ist ferner möglich, zusätzlich noch in den meisten Fällen auch noch das Werkstück 91' zwischen dem Spannungsvorrichtungsunterteil 92' und dem Spannungsvorrichtungsoberteil 90' einzuspannen.

## Patentansprüche

1. Verfahren zum Betrieb einer Werkzeugmaschine (10), insbesondere einer Verzahnmaschine, mit wenigstens zwei Maschinentischen (50, 51), mit wenigstens einem gemeinsamen Gegenständer (60) und mit mindestens zwei Gegenhalterarmen (30, 31), wobei die Spannkräfte auf ein eingespanntes und/oder einzuspannendes Werkstück an der jeweiligen Position in Abhängigkeit des aktuellen Prozesses und in Abhängigkeit von den gemäß aktuellem Prozess notwendigen Prozesskräften gesteuert und/oder geregelt werden,
**dadurch gekennzeichnet,**
**dass** die Werkzeugmaschine (10) eine Be- und Entladeposition, die eine erste Position eines der mindestens zwei Maschinentische (50, 51) ist, aufweist und dass sämtliche an der Be- und Entladeposition durchgeführten Nebenprozesse mit reduzierter Spannkraft durchgeführt werden, wobei die Spannkraft derart bemessen ist, dass sie ausreichend groß ist, um das Werkstück an der Be- und Entladeposition in Position zu halten, dass vor einer Bewegung bzw. bei einer Bewegung des Werkstückes von der Be- und Entladeposition in die Bearbeitungsposition die Spannkraft erhöht wird, und dass vor einer Bewegung bzw. bei einer Bewegung des Werkstückes von der Bearbeitungsposition, die eine zweite Position eines der Maschinentische (50, 51) ist, in die Be- und Entladeposition die Spannkraft verringert wird.

2. Verfahren nach Anspruch 1, **dadurch gekennzeichnet, dass** ein Werkstück beim Be- und/oder Entladen der Werkzeugmaschine (10) mit einer Spannkraft zentriert und gespannt wird, wobei die Spannkraft derart bemessen ist, dass sie ausreichend groß ist, um das Werkstück für den Werkstückpositionierungsprozess in Position zu halten.

3. Werkzeugmaschine (10), insbesondere Verzahnmaschine, mit wenigstens zwei Maschinentischen (50, 51),
mit wenigstens einem gemeinsamen Gegenständer (60),
mit mindestens zwei Gegenhalterarmen (30, 31) und
mit wenigstens einer Steuer- und/oder Regelungseinheit, wobei mittels der Steuer- und/oder Regelungseinheit die Spannkräfte auf ein eingespanntes und/oder einzuspannendes Werkstück an der jeweiligen Position in Abhängigkeit des aktuellen Prozesses und in Abhängigkeit von den gemäß aktuellem Prozess notwendigen Prozesskräften Steuer- und/oder regelbar sind,
**dadurch gekennzeichnet,**
**dass** die Werkzeugmaschine (10) eine Be- und Entladeposition, die eine erste Position eines der mindestens zwei Maschinentische (50, 51) ist, aufweist und dass die Spannkraft mittels der Steuer- und/oder Regelungseinheit mittelbar und/oder unmittelbar derart : angesteuert wird, dass sämtliche an der Be- und Entladeposition durchgeführten Nebenprozesse mit reduzierter Spannkraft durchgeführt werden, wobei die Spannkraft derart bemessen ist, dass sie ausreichend groß ist, um das Werkstück an der Be- und Entladeposition in Position zu halten, und
**dass** vor einer Bewegung bzw. bei einer Bewegung des Werkstückes von der Be- und Entladeposition in die Bearbeitungsposition die Spannkraft erhöht wird und/oder dass vor einer Bewegung bzw. bei einer Bewegung des Werkstückes von der Bearbeitungsposition, die eine zweite Position eines der Maschinentische (50, 51) ist, in die Be- und Entladeposition die Spannkraft verringert wird.

4. Werkzeugmaschine (10) nach Anspruch 3, **dadurch gekennzeichnet, dass** die Spannkraft mittels der Steuer- und/oder Regelungseinheit mittelbar und/oder unmittelbar derart steuerbar ist, so dass ein Werkstück beim Be- und/oder Entladen der Werkzeugmaschine (10) mit einer Spannkraft zentrierbar und spannbar wird, wobei die Spannkraft derart bemessen ist, dass sie ausreichend groß ist, um das Werkstück für den Werkstückpositionierungsprozess in Position zu halten.

5. Werkzeugmaschine (10) nach einem der Ansprüche 3 oder 4, **dadurch gekennzeichnet, dass** mittels der Werkzeugmaschine (10) das Verfahren gemäß einem der Ansprüche 1 oder 2 durchführbar ist.

## Claims

1. A method for operating a machine tool (10), in particular a gear cutting machine, comprising at least two machine tables (50, 51), with at least one common counter-support (60) and with at least two overarms (30, 31), wherein the clamping forces acting on a clamped workpiece and/or a workpiece to be clamped are controlled and/or regulated at the respective position in dependence on the current process and in dependence on the process forces necessary according to the current process,
**characterized in**
**that** the machine tool (10) has a loading and unloading position, which is a first position of one of the at least two machine tables (50, 51), and in that all secondary processes performed at the loading and unloading position are performed with a reduced clamping force, the clamping force being dimensioned in such a way that it is sufficiently large to hold the workpiece in position at the loading and unloading position that, before a movement or during a movement of the workpiece from the loading and unloading position into the machining position the clamping force is increased when the workpiece is moved from the loading and unloading position into the machining position, and in that the clamping force is reduced before a movement or during a movement of the workpiece from the machining position, which is a second position of one of the machine tables (50, 51), into the loading and unloading position.

2. The method according to claim 1, **characterized in that** on loading and/or unloading the machine tool (10) a workpiece is centered and clamped with a clamping force, wherein the clamping force is dimensioned such that it is large enough to keep the workpiece in position for the workpiece positioning process.

3. A machine tool (10), in particular a gear cutting machine, with at least two machine tables (50, 51),
with at least one common counter-support (60),
with at least two overarms (30, 31), and
with at least one control and/or regulating unit, wherein by means of the control and/or regulating unit the clamping forces acting on a clamped workpiece and/or on a workpiece to be clamped can be controlled and/or regulated at the respective position in dependence on the current process and in dependence on the process forces necessary according to the current process,
**characterized in**
**that** the machine tool (10) has a loading and unloading position, which is a first position of one of the at least two machine tables (50, 51), and that the clamping force is directly and/or indirectly actuated by means of the control and/or regulating unit in such a way that all secondary processes carried out at the loading and unloading position are carried out with a reduced clamping force, wherein the clamping force preferably is dimensioned such that it is large enough to keep the workpiece in position at the loading and unloading position, and
**that** before a movement or during a movement of the workpiece from the loading and unloading position into the machining position the clamping force is increased and/or that before a movement or during a movement of the workpiece from the machining position, which is a second position of one of the machine tables (50, 51), into the loading and unloading position the clamping force is reduced.

4. The machine tool (10) according to claim 3, **characterized in that** the clamping force is directly and/or indirectly controllable by means of the control and/or regulating unit in such a way that on loading and/or unloading the machine tool (10) a workpiece can be centered and clamped with a clamping force, wherein the clamping force is dimensioned such that it is large enough to keep the workpiece in position for the workpiece positioning process.

5. The machine tool (10) according to any of claims 3 or 4, **characterized in that** by means of the machine tool (10) the method according to any of claims 1 or 2 can be carried out.

## Revendications

1. Procédé pour faire fonctionner une machine-outil (10), en particulier une machine à tailler les engrenages, comportant au moins deux tables de machine (50, 51), avec au moins un contre-support commun (60) et avec au moins deux bras en surplomb (30, 31), dans lequel les forces de serrage sur une pièce à usiner serrée et/ou à serrer sont commandées et/ou réglées à la position respective en fonction du processus en cours et en fonction des forces de processus nécessaires selon le processus en cours,
**caractérisé en ce que**
la machine-outil (10) possède une position de chargement et de déchargement, qui est une première position de l'une des au moins deux tables de machine (50, 51), et **en ce que** tous les processus secondaires effectués dans la position de chargement et de déchargement sont réalisés avec une force de serrage réduite, la force de serrage étant dimensionnée de telle sorte qu'elle soit suffisamment grande pour maintenir la pièce à usiner dans la position de chargement et de déchargement pour que, avant un mouvement ou pendant un mouvement de la pièce à usiner de la position de chargement et de déchargement à la position d'usinage la force de serrage soit augmentée, et **en ce que** la force de serrage est réduite avant un mouvement ou pendant un mouvement de la pièce à usiner de la position d'usinage, qui est une deuxième position de l'une des tables de machine (50, 51), à la position de chargement et de déchargement.

2. Procédé selon la revendication 1, **caractérisé en ce qu'**une pièce à usiner est centrée et serrée avec une force de serrage pendant le chargement et/ou le déchargement de la machine-outil (10), la force de serrage étant dimensionnée de telle sorte qu'elle est suffisamment grande pour maintenir la pièce à usiner en position pour le processus de positionnement de la pièce à usiner.

3. Machine-outil (10), en particulier une machine à tailler les engrenages, comportant au moins deux tables de machine (50, 51),
avec au moins un contre-support commun (60),
avec au moins deux bras en surplomb (30, 31) et
avec au moins une unité de commande et/ou de régulation, l'unité de commande et/ou de régulation permettant de commander et/ou de réguler les forces de serrage sur une pièce à usiner serrée et/ou une pièce à usiner à serrer à la position respective en fonction du processus en cours et en fonction des forces de processus nécessaires selon le processus en cours,
**caractérisé en ce que**
la machine-outil (10) présente une position de chargement et de déchargement, qui est une première position de l'une des au moins deux tables de machine (50, 51), et **en ce que** la force de serrage est actionnée indirectement et/ou directement au moyen de l'unité de commande et/ou de réglage de telle sorte que tous les processus secondaires effectués dans la position de chargement et de déchargement sont réalisés avec une force de serrage réduite, la force de serrage étant dimensionnée de telle sorte qu'elle est suffisamment grande pour maintenir la pièce à usiner dans la position de chargement et de déchargement, et
**en ce que** la force de serrage est augmentée avant un mouvement ou pendant un mouvement de la pièce à usiner de la position de chargement et de déchargement à la position d'usinage et/ou **en ce que** la force de serrage est réduite avant un mouvement ou pendant un mouvement de la pièce à usiner de la position d'usinage, qui est une deuxième position de l'une des tables de machine (50, 51), à la position de chargement et de déchargement.

4. Machine-outil (10) selon la revendication 3, **caractérisée en ce que** la force de serrage peut être commandée indirectement et/ou directement au moyen de l'unité de commande et/ou de régulation de telle sorte qu'une pièce à usiner peut être centrée et serrée avec une force de serrage pendant le chargement et/ou le déchargement de la machine-outil (10), la force de serrage étant dimensionnée de telle sorte qu'elle est suffisamment grande pour maintenir la pièce à usiner en position pour le processus de positionnement de la pièce à usiner.

5. Machine-outil (10) selon l'une des revendications 3 ou 4, **caractérisée en ce qu'**au moyen de la machine-outil (10), le procédé selon l'une quelconque des revendications 1 ou 2 peut être réalisé.
